# EUROPÄISCHE PATENTSCHRIFT

(11) **EP 2 360 385 B1**
(45) Veröffentlichungstag und Bekanntmachung des Hinweises auf die Patenterteilung: **20.06.2012**
(21) Anmeldenummer: 11003832.0
(22) Anmeldetag: 16.02.2007
(51) Int. Cl.: F16D 65/00, F16D 65/14, B60T 13/74, H02K 7/00, H02K 7/116

(54) **Geräuschreduzierter elektrischer Bremsaktuator**
Low noise elektric brake actuator
Actionneur de freinage à faible bruit

(30) Priorität: 20.02.2006 DE 102006007755
(43) Veröffentlichungstag der Anmeldung: 24.08.2011
(62) Teilanmeldung aus: 07703503.8
(73) Patentinhaber: Lucas Automotive GmbH, 56070 Koblenz (DE)
(72) Erfinder: Poertzgen, Gregor, 56068 Koblenz (DE)
(74) Vertreter: Röthinger, Rainer

(56) Entgegenhaltungen:
- WO-A-2004/044445
- US-A- 3 463 950

## Beschreibung

### Gebiet der Erfindung

Die Erfindung betrifft das Gebiet der Bremsen und insbesondere der Kraftfahrzeugbremsen. Genauer gesagt betrifft die Erfindung einen elektromotorisch betätigbaren Bremsaktuator.

### Hintergrund der Erfindung

Dokument US 3,463,950 zeigt einen elektrisch angetriebenen Aktuator, umfassend einen Elektromotor zur Erzeugung eines Drehmoments und eine Getriebeeinrichtung zur Drehmomentübertragung, wobei die Getriebeeinrichtung wenigstens ein drehmomentübertragendes Getriebebauteil umfasst, wobei ein schwingungsdämpfendes Element vorgesehen ist.

Dokument WO 2004/044445 A2 zeigt einen elektrischen Bremsaktuator mit einer Getriebeeinheit.

Elektromotorisch betätigbare Bremsaktuatoren finden sowohl bei Betriebsbremsen als auch bei Feststellbremsen (auch Parkbremsen genannt) von Kraftfahrzeugen Verwendung. Vorteilhaft bei dieser Ausführung gegenüber Bremsen, die ausschließlich mittels Zügen oder Hydraulik betätigt werden, ist die Tatsache, dass der Fahrer keine hohe Muskelkraft aufbringen muss, um die Bremse zu betätigen. Auch lässt sich eine elektrisch betätigte Bremse gut mit moderner Bordelektronik kombinieren. Sowohl das Spannen als auch das Lösen der Bremse kann somit von anderen registrierten Ereignissen oder Messwerten abhängig gemacht werden. Zum Beispiel kann für das "Anfahren am Berg" die Bremse automatisiert gelöst werden, so dass der Fahrer zusätzlich zum Zusammenspiel von Gas und Kupplung nicht auch noch die Bremse bedienen muss. Verfügt das Fahrzeug über ein automatisches Getriebe, kann das Betätigen des Gaspedals genügen, um am Berg anzufahren, ohne das Fahrzeug dabei in die falsche Richtung rollen zu lassen, und ohne den Antriebsmotor in einem ungünstigen Arbeitspunkt zu betreiben.

Einige der bekannten Vorschläge integrieren den Bremsaktuator mit dem Bremssattel und den Reibbelägen direkt am Fahrzeugrad. Solchermaßen ausgerüstete Fahrzeugbremsen können bei entsprechender Auslegung zum Beispiel autonome Systeme bilden, die auch ohne Kommunikation mit einer zentralen Steuereinheit funktionssicher sind.

Bei elektrisch betriebenen Bremsaktuatoren wird zur Erreichung der für die Bremsbetätigung benötigten Kraft in der Regel das Drehmoment eines Elektromotors über eine oder mehrere Getriebestufen untersetzt. Die Art der jeweiligen Getriebestufen kann dabei variieren, üblich sind beispielsweise Stirnrad-, Schnecken-, Planenten-, Wälzkörper- oder Riemengetriebe. Im Kraftfahrzeugbau haben sich letztere besonders bewährt, da sie im Gegensatz zu den meisten anderen Getriebearten über gute Geräuschdämpfungseigenschaften verfügen und somit in der Lage sind, den vom Elektromotor erzeugten Körperschall wirkungsvoll von dem restlichen Antriebsstrang abzukoppeln.

Es hat sich gezeigt, dass trotz der guten Geräuschdämpfungseigenschaften von Riemengetrieben eine erwartete Geräuschdämpfung des gesamten Bremsaktuators oft nicht erreicht wird, da teilweise andere Bauteile des Aktuators die von dem Elektromotor erzeugten Vibrationen um die Riemeneinheit herum weiterleiten. Lösungen, die eine vollständige Entkoppelung des vom Elektromotor verursachten Körperschalls von einem nachfolgenden Antriebsstrang erlauben, sind aufwändig in Herstellung und Montage, aufgrund der Vielzahl der verwendeten Teile oftmals fehleranfällig und beeinträchtigen darüber hinaus möglicherweise die Präzision in der Drehmomentübertragung der gesamten Getriebebaugruppe.

Der Erfindung liegt daher die Aufgabe zugrunde, einen Bremsaktuator anzugeben, der die beschriebenen Nachteile vermeidet.

### Kurzer Abriss der Erfindung

Die Aufgabe wird durch einen elektrisch betriebenen Bremsaktuator gemäß dem Anspruch 1 gelöst.

Gemäß einer Ausführung kann der Elektromotor des Bremsaktuators eine Motorwelle besitzen und die Getriebeeinrichtung zur Drehmomentübertragung ein Getriebe mit einer zur Motorwelle parallelen Getriebewelle aufweisen, wobei das Drehmoment vom Elektromotor zum Getriebe mittels eines Riemenantriebs übertragen wird und der Abstand zwischen der Motorwelle und der Getriebewelle mittels eines starren Abstandshalters fixiert ist. Dabei befinden sich gegenüberliegende Enden des Abstandshalters auf verschiedenen Seiten der durch einen Riemen des Riemenantriebs definierten Ebene. Mit anderen Worten, der Abstandshalter kann z.B. S- oder Z-förmig durch die Riemenebene hindurch verlaufen, um dadurch eine verbesserte Fixierung zu erzielen.

Der Bremsaktuator kann ferner ein Aktuatorgehäuse umfassen und wenigstens ein Bauteil des Aktuators, wie beispielsweise der Abstandshalter, mittels eines schwingungsdämpfenden Elements am Aktuatorgehäuse abgestützt sein.

Die Getriebeeinrichtung zur Drehmomentübertragung kann ein Riemengetriebe mit einem Riemen und wenigstens zwei Riemenräder beinhalten. Alternative Getriebekonzepte ind ebenfalls denkbar, z.B. Stirnradgetriebe oder in Hinsicht auf ihre Lebensdauer und den Bauraum vorteilhafte Schneckengetriebe.

Das Riemengetriebe und insbesondere der Riemen können eine schwingungsmäßige Entkopplung des Elektromotors von nachfolgenden Aktuatorkomponenten und damit eine Schwingungsdämpfung gewährleisten. Zur Unterstützung der Schwingungsdämpfung kann der Riemen aus einem elastischen Material gefertigt sein.

Gemäß einer ersten Variante kann es sich bei dem Riemen um einen zahnlosen Riemen handeln. Gemäß einer zweiten Variante ist der Riemen als Zahnriemen ausgebildet. Bei der zweiten Variante können der Zahnriemen sowie die Riemenräder eine zueinander korrespondierende Teilung von weniger als 2,5 mm und insbesondere von weniger als 1,5 mm aufweisen. Mit abnehmender Teilung verringert sich der Eintrittsstoß, und die Schwingungsneigung nimmt ab. Der Zahnriemen sowie die Riemenräder können schräg verzahnt sein, wodurch die Schwingungsneigung weiter abnimmt und eine gleichmäßigere Drehmomentübertragung zwischen dem Riemen und dem Rad erzielt wird.

Bei einem Riemengetriebe können über die entsprechenden Wellen des Motors bzw. des Getriebes auch den Wellen zugeordnete Riemenräder mittels des starren Abstandshalters zueinander fixiert sein. Mit anderen Worten, der Abstandshalter kann zum Festlegen und zum Aufrechterhalten des gegenseitigen Abstands der Riemenräder verwendet werden. Bei dem Abstandshalter handelt es sich vorzugsweise um ein eigenständiges Bauteil. Der Abstandshalter kann aber auch in ein Aktuatorgehäuse integriert sein.

Wenigstens eines der beiden Riemenräder kann über ein Drehmoment übertragendes und zu seiner Rotationsachse koaxiales schwingungsdämpfendes Element verfügen. Gemäß einer Ausführungsmöglichkeit besitzt das betreffende Riemenrad eine Nabe aus einem starrem Material mit einem drehmomentschlüssig um die Nabe herum angeordneten Element aus einem schwingungsdämpfenden Material, welches in unmittelbarem Kontakt mit dem Antriebsriemen stehen kann.

Ferner können Zahnkranz und Nabe aus einem widerstandsfähigen und gegebenenfalls harten Material gefertigt sein. Als eine erfolgreiche Materialwahl haben sich ein Sintermetall für die Nabe und ein Hartkomponenten-Kunststoff für den Zahnkranz erwiesen.

Das schwingungsdämpfende Element besteht im Vergleich zur Nabe und/oder zum Zahnkranz zweckmäßiger Weise aus einem weicheren Material, vorzugsweise einem zumindest geringfügig elastischen Material mit hoher Eigendämpfung. Bevorzugt wird das schwingungsdämpfende Element in konstanter Dicke, bezogen auf die Erstreckung der Riemenscheibenachse, ausgeführt; eine ungleichförmige Dicke kann sich jedoch in einigen Fällen ebenfalls anbieten. Üblicherweise wird das schwingungsdämpfende Element so geformt, dass es einen konstanten mittleren Abstand zur Drehachse besitzt. Dabei kann das Element entlang einer Kreislinie oder einer beliebigen Kurve geformt sein. Um die Drehmomentübertragungs- und Schwingungsdämpfungscharakteristik des Riemenrades zu beeinflussen, kann die radiale Erstreckung des schwingungsdämpfenden Elements variieren. In der Praxis haben sich beispielsweise gleichförmige Ausbuchtungen bewährt.

Das Riemengetriebe oder ein anderes Element kann das von dem Elektromotor erzeugte Drehmoment auf ein nachgeschaltetes Getriebe, vorzugsweise ein Planetengetriebe, übertragen. Dieses Planetengetriebe kann ein- oder mehrstufig ausgeführt sein. Im Fall einer mehrstufigen Ausführung empfiehlt es sich, die verschiedenen Stufen koaxial anzuordnen. Jede Stufe des Planetengetriebes kann über ein Sonnenrad, eine Anzahl Planetenräder sowie erforderlichenfalls ein Hohlrad verfügen. Im Fall einer mehrstufigen Ausführung des Getriebes können aufeinander folgende Hohlräder in einem einzigen Bauteil integriert sein.

Von den Achsen der Planetenräder kann das auf sie übertragene Drehmoment mittels eines Planetenradträgers abgegeben werden, welcher koaxial zum Sonnenrad drehbar gelagert sein kann. Der Planetenradträger kann über ein oder mehrere trägerfeste Bauteile (z. B. Stifte oder Rippen) verfügen, über welche das Drehmoment dieses Trägers auf eine koaxial zu ihr angebrachte und drehbar gelagerte weitere Getriebekomponente übertragen werden kann. Zweckmäßigerweise ist diese weitere Getriebekomponente auf der dem Getriebeabtrieb zugewandten Seite der Planetenräder vorgesehen. Für einen gleichmäßigen Lauf empfiehlt es sich, die trägerfesten Bauteile radialsymmetrisch oder regelmäßig entlang einer zur Rotationsachse des Trägers koaxialen Kreislinie auszuführen. Das oder die trägerfesten Bauteile greifen zweckmäßigerweise in korrespondierende Aussparungen der weiteren Getriebekomponente ein. Diese Aussparungen können mit einem schwingungsdämpfenden Material ausgekleidet sein.

Ferner kann ein elektrisch angetriebener Bremsaktuator zur Verfügung gestellt werden, der ein Aktuatorgehäuse, einen Elektromotor zur Erzeugung eines Drehmoments, eine Getriebeeinrichtung zur Drehmomentübertragung und ein Element zur Drehmomentabgabe umfasst, wobei wenigstens ein Bauteil des Aktuators mittels eines schwingungsdämpfenden Elements am Aktuatorgehäuse abgestützt ist und/oder wobei das Drehmoment vom Elektromotor zum Element zur Drehmomentabgabe mittels eines schwingungsdämpfenden Elements übertragen werden.

Material und Ausführung des Aktuatorgehäuses können ausgewählt sein, um eine weitere Geräuschdämpfung zu erzielen. Beispielsweise kann Aluminium-Druckguss oder Kunststoff-Spritzguss verwendet werden. Zusätzlich kann das Gehäuse ein- oder beidseitig ganz oder teilweise mit einer Schicht aus einem schwingungsdämpfenden Material überzogen werden. Gegebenenfalls können verschiedene Teile des Aktuatorgehäuses aus unterschiedlichen Materialien und/oder Ausführungen bestehen.

Der Bremsaktuator kann ein Getriebe, insbesondere ein Planetengetriebe, enthalten. Ein Hohlrad des Planetengetriebes kann mit einem oder mehreren Elementen aus einem schwingungsdämpfenden Material am Aktuatorgehäuse abgestützt sein. Werden mehrere solche Elemente verwendet, ist eine gleichmäßige Verteilung entlang des Umfangs des Hohlrades bevorzugt. Im Fall eines einzelnen Bauteils aus einem schwingungsdämpfenden Material kann dieses das Hohlrad vollständig umfassen oder nur einen Teil des Hohlrades abdecken.

Der Drehmoment erzeugende Elektromotor kann durch wenigstens ein Element aus einem schwingungsdämpfenden Material am Aktuatorgehäuse abgestützt sein. Gemäß einer ersten Ausführungsmöglichkeit kann sich ein solches Element in Flucht mit der Motorwelle an dem Ende des Elektromotors befinden, an dem kein Drehmoment abgegeben wird. Gemäß einer weiteren Ausführungsmöglichkeit können ein oder mehrere Elemente aus schwingungsdämpfendem Material in Umfangsrichtung um den Elektromotor herum angeordnet sein. Die genannten Ausführungsmöglichkeiten können darüber hinaus auch kombiniert werden.

Wie bereits erwähnt ist zur Fixierung des Abstandes zwischen der Motorwelle des Elektromotors und einer zur Motorwelle wenigstens annähernd parallelen Getriebewelle ein starrer Abstandshalter vorgesehen. Der Abstandshalter ist zweckmäßigerweise mittels wenigstens eines schwingungsdämpfenden Elements am Aktautor gehäuse abgestützt. Gemäß einer ersten Variante handelt es sich bei dem Abstandshalter und dem wenigstens einen schwingungsdämpfenden Element, mittels dessen sich der Abstandshalter am Aktuatorgehäuse abstützt, um zwei getrennte Bauteile. Dieser Ansatz ermöglicht es beispielsweise, das wenigstens eine schwingungsdämpfende Element vorab im Bereich des Aktuatorgehäuses zu befestigen, bevor der Abstandshalter montiert wird. Gemäß einer zweiten Variante sind der Abstandshalter und das wenigstens eine schwingungsdämpfende Element miteinander verbunden (z.B. mittels einer Zwei-Komponenten-Verbindung) und bilden somit ein separat handhabbares Abstandshalter-Bauteil.

Gemäß einer Variante können eines oder mehrere der schwingungsdämpfenden Elemente aus einem Elastomer bestehen. Andere Materialien und insbesondere die Verwendung verschiedener schwingungsdämpfender Materialien für die unterschiedlichen Elemente sind ebenfalls denkbar.

Der Elektromotor kann zugunsten eines vibrationsarmen Laufs über eine Polzahl von mehr als 5 verfügen. Insbesondere kann die Polzahl auch 7 betragen. Ebenso kann der Elektromotor einen fein gewuchteten Anker aufweisen. Auch ein geklebtes Fluxblech und/oder bedämpfte Bürsten sind möglich. Weitere Geräuschreduzierung kann durch Einsatz eines bürstenlosen Elektromotors und/oder eines drehzahlreduzierten Elektromotors erzielt werden. Weiterhin kann der Elektromotor, beispielsweise mittels einer elektronischen Regelung, in einem Drehzahlbereich betrieben werden, der zu einem verminderten Betriebsgeräusch führt.

Der elektrisch angetriebene Bremsaktuator kann Teil eines Bremssystems, beispielsweise eines Fahrzeugbremssystems, sein. Der Bremsaktuator kann hierbei entweder der Feststellbremse oder der Betriebsbremse zugeordnet werden. Möglich ist auch eine gleichzeitige Zuordnung des Bremsaktuators zur Feststellbremse und zur Betriebsbremse.

### Kurze Beschreibung der Zeichnungen

Weitere Einzelheiten und Vorteile der Erfindung ergeben sich aus der nachfolgenden Beschreibung eines bevorzugten Ausführungsbeispiels sowie aus den Figuren. Es zeigen:
- Fig. 1: ein Ausführungsbeispiel eines erfindungsgemäßen Bremsaktuators in einer Schnittansicht;
- Fig. 2: eine perspektivische Darstellung eines Riemengetriebes des Bremsaktuators gemäß Fig. 1;
- Fig. 3: eine perspektivische Darstellung eines Hohlrades eines Planetengetriebes des Bremsaktuators gemäß Fig. 1;
- Fig. 4: eine perspektivische Darstellung eines Abstandshalters des Bremsaktuators gemäß Fig. 1;
- Fig. 5: eine Explosionszeichnung des Planetengetriebes des Bremsaktuators gemäß Fig. 1;
- Fig. 6: eine perspektivische Darstellung einer Trägerplatte mit Abtriebszapfen des Bremsaktuators gemäß Fig. 1;

### Beschreibung eines bevorzugten Ausführungsbeispiels

Im Folgenden wird ein Ausführungsbeispiel eines elektromotorisch betätigbaren Bremsaktuators beschrieben. Der beschriebene Bremsaktuator gibt ein Drehmoment ab, das zur Betätigung einer Fahrzeugbremse (nicht dargestellt) genutzt werden kann.

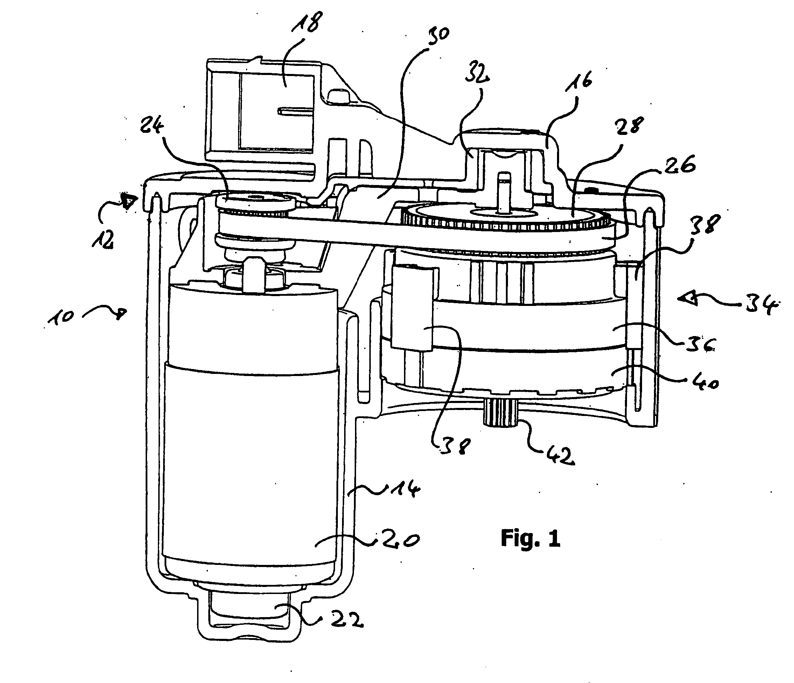

Fig. 1 zeigt einen Teilschnitt durch einen Bremsaktuator 10 mit einem Aktuatorgehäuse 12 bestehend aus einem Gehäusekörper 14 und einem Gehäusedeckel 16. Der Gehäusedeckel 16 beinhaltet eine Anschlussbuchse 18 und setzt auf den in Fig. 1 oberen Rand des Gehäusekörpers auf. Die Anschlussbuchse 18 ist elektrisch mit den Anschlüssen eines Elektromotors 20 verbunden.

Der Elektromotor 20 ist passgenau in einer Aussparung des Gehäusekörpers 14 aufgenommen und stützt sich an seinem unteren Ende mittels eines Elementes 22 aus schwingungsdämpfendem Material am Boden des Gehäusekörpers 14 ab. An seiner dem Gehäusedeckel zugewandten Seite trägt der Elektromotor 20 ein erstes Zahnriemenrad 24. Dieses erste Zahnriemenrad ist drehmomentschlüssig mit einer Welle des Elektromotors 20 verbunden.

Ein Zahnriemen 26 überträgt das auf ihn vom ersten Zahnriemenrad 24 übertragenen Drehmoment auf ein zweites Zahnriemenrad 28. Die Zahnriemenräder 24 und 28 sowie der Zahnriemen 26 verfügen über eine Schrägverzahnung von etwa 2° sowie eine Teilung von 2 mm. Das erste Zahnriemenrad 24 trägt 22 Zähne und das zweite Zahnriemenrad 28 trägt 69 Zähne. Damit beträgt das Untersetzungsverhältnis des Riemengetriebes ca. 3,13 : 1.

Ein starrer Abstandshalter 30 ist an seinem in Fig. 1 linken Ende kraftschlüssig mit dem oberen Ende des Körpers des Elektromotors 20 verbunden. Das rechte Ende des Abstandshalters 30 bildet eine Aufnahme für eine das zweite Zahnriemenrad 28 tragende Achse 32. Die beiden Enden des Abstandshalters 30 liegen auf entgegengesetzten Seiten der durch den Zahnriemen 26 definierten Ebene. Dies wird durch die ungefähre S-Form des Abstandshalters ermöglicht. Der Mittelteil des Abstandshalters 30 führt durch einen Freiraum, der sich zwischen den beiden Zahnriemenrädern 24 und 28 erstreckt. Mittels eines Elementes 32, das aus einem schwingungsdämpfenden Material wie beispielsweise einem Elastomer hergestellt ist, stützt sich der Abstandshalter 30 auf seiner Oberseite vibrationsdämmend gegenüber dem Gehäusedeckel 16 ab.

Über das Zahnriemenrad 28 wird ein zweistufiges Planetengetriebe 34 angetrieben. Ein Hohlrad 36 des Planetengetriebes 34 trägt auf seiner Innenseite in dieser Ausführung zwei unterschiedliche Verzahnungen für die beiden Getriebestufen. Das Hohlrad 36 stützt sich über die drei Elemente 38 aus einem elastischen, schwingungsdämpfenden Material gegen den Gehäusekörper 14 ab. Ein unterer Abschlussring 40 sichert die in dieser Darstellung nicht sichtbaren inneren Getriebeteile des Planetengetriebes 34 gegen ein Herausfallen aus dem Hohlrad 36. Ein Zapfen 42 bildet den Drehmomentausgang des Aktuators und ist bestimmt, über weitere Anlenkungsteile eine oder mehrere Bremsbacken zu betätigen. An seiner Außenseite kann er ein Profil aufweisen, weiches die Drehmomentübertragung erleichtert. In der gewählten Ausführung handelt es sich um ein "male" Torx-Profil, mit dem der Zapfen 42 drehmomentschlüssig in einen Mechanismus eingreift, der schließlich die Bremsbacken betätigt. Dieser Mechanismus kann ein Spindelgetriebe umfassen.

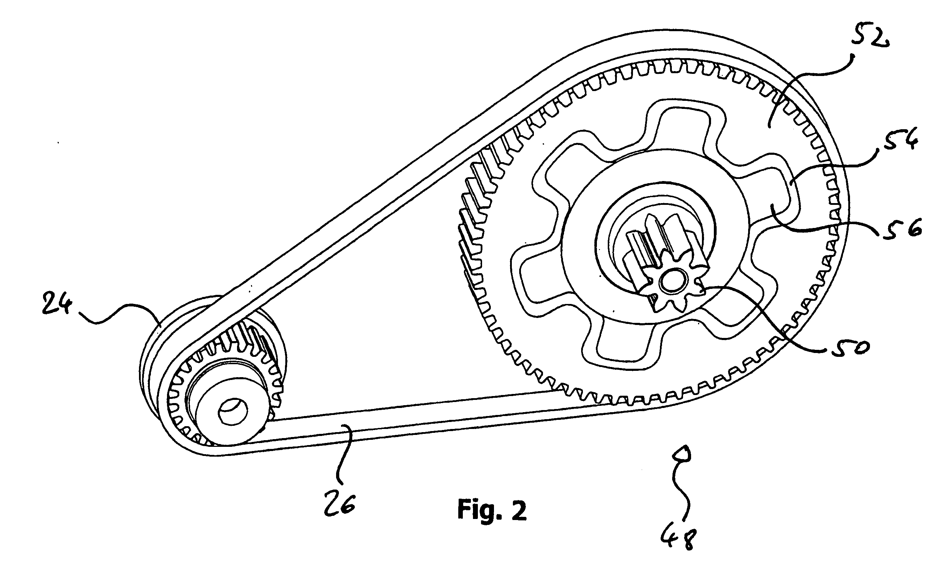

Fig. 2 zeigt eine perspektivische Darstellung eines die Zahnriemenräder 24 und 28 sowie den Zahnriemen 26 umfassenden Zahnriemengetriebes 48. Deutlich sichtbar ist ein mit dem Zahnriemenrad 28 drehfest verbundenes Sonnenrad 50 einer ersten Stufe des Planetengetriebes 34. Das Zahnriemenrad 28 umfasst einen Zahnkranz 52, eine zur Drehachse des Zahnriemenrades 28 konzentrische Buchse aus schwingungsdämpfendem Elastomermaterial 54 sowie eine Nabe 56 mit dem Sonnenrad 50. In der dargestellten Ausführung weist der Zahnkranz 52 innen sechs mäandernde Ausstülpungen (oder Ausfüllungen) auf, an die das schwingungsdämpfende Material 54 mit im Wesentlichen konstanter Dicke formschlüssig und drehmomentübertragend angrenzt. Korrespondierende mäandernde Einbuchtungen befinden sich am Außenumfang der Nabe 56, so dass insgesamt eine drehmomentschlüssige Verbindung zwischen Zahnkranz 52 und Nabe 56 entsteht. In der Praxis hat sich für die Nabe 56 der Werkstoff PBT-GF30 bewährt.

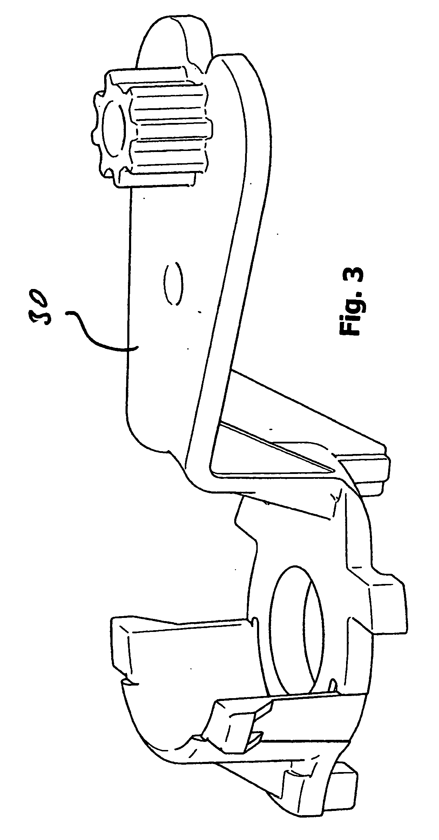

Fig. 3 zeigt eine perspektivische Darstellung des Abstandshalters 30, der in Fig. 1 zwischen dem Elektromotor 20 und dem Planetengetriebe 34 montiert gezeigt ist. Die in Fig. 3 linke Seite des Abstandshalters wird kraftschlüssig mit dem Elektromotor 20 verbunden. Auf der in Fig. 3 rechten Seite ist gut zu erkennen, dass der Außenumfang der Aufnahme für die Achse 32 als Mehrkeilprofil mit acht Keilen ausgeführt ist. Der Abstandshalter 30 ist aus einem starren Material wie beispielsweise Hartkunststoff oder Metall gefertigt.

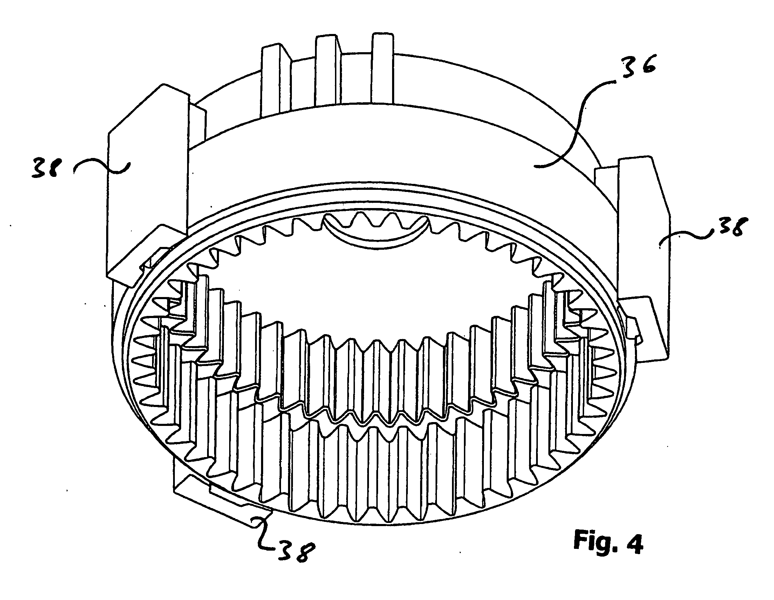

Fig. 4 zeigt das Hohlrad 36 mit den daraus angesteckten und aus einem schwingungsdämpfenden Material bestehenden Elementen 38. Als vorteilhaft hat sich eine Fertigung der Elemente 38 aus EPDM (Ethylen-Propylen-Dien Kautschuk) erwiesen. Im eingebauten Zustand stützt sich das Hohlrad 36 über die Elemente 38 am Gehäusekörper 14 ab. Gut zu erkennen sind die beiden inneren Verzahnungen des Hohlrades für die beiden Getriebestufen des Planetengetriebes 34. Die in Fig. 4 untere Verzahnung ist entlang eines etwas kleineren Kreisumfangs angeordnet ist als die obere, so dass die Montierbarkeit des Planetengetriebes gewährleistet ist.

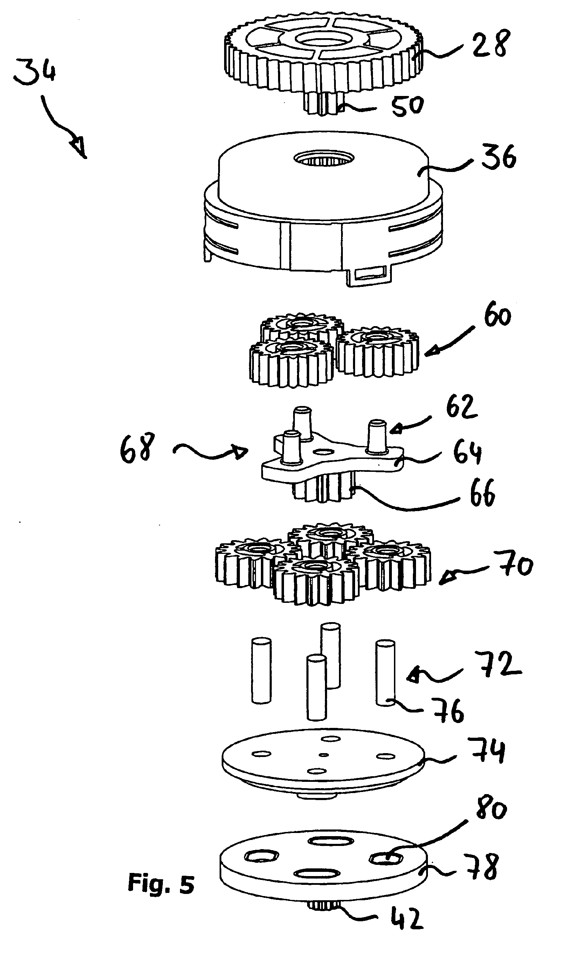

Fig. 5 zeigt eine Explosionsdarstellung des Aufbaus des Planetengetriebes 34. In dieser Darstellung zuoberst ist das zweite Riemenrad 28 gezeigt, dessen Sonnenrad 50 nach Montage in das Hohlrad 36 eintaucht. Innerhalb des Hohlrades 36 laufen drei Planetenräder 60 zwischen dem Sonnenrad 50 und dem Hohlrad 36. Die Achsen 62 der drei Planetenräder 60 sind auf einem ersten Planetenradträger 64 drehmomentübertragend befestigt, der auf seiner den Planetenrädern 60 gegenüberliegenden Seite ein zweites Sonnenrad 66 trägt. Die Achsen 62, der Planetenradträger 64 und das Sonnenrad 66 bilden in der dargestellten Ausführung ein einziges Bauteil 68.

Zwischen dem zweiten Sonnenrad 66 und dem Hohlrad 36 sind vier weitere Planetenräder 70 angeordnet. Die vier Planetenräder 70 laufen auf vier stiftförmigen Achsen 72, welche an einem zusätzlichen Planetenradträger 74 befestigt sind. Die vier Achsen 72 erstrecken sich durch zugehörige Bohrungen im Planetendatenträger 74 derart, dass Achsabschnitte 76 auf der in Fig. 5 unteren Seite des Trägers 74 hervorstehen. Mittels der hervorstehenden Achsabschnitte 76 oder separater Mittel lässt sich das Drehmoment auf eine nachfolgende Getriebekomponente 78 übertragen.

Die den Träger 74 durchsetzenden Achsabschnitte 76 können als Verlängerungen der Achsen 72 ausgebildet sein, so dass jeweils ein Stiftabschnitt 76 und eine Achse 72 ein integriertes Bauteil bilden. Bei Ausbildung des Planetenradträgers 74 als Kunststoffteil können die Abschnitte 76 und die Achsen 72 getrennt angespritzt werden, etwa durch Verwendung eines Zwei-Komponenten-Spritzverfahrens.

Bei der dargestellten Ausführungsform besitzen die beiden Sonnenräder 50, 66 verschiedene Teilungen, die mit denen der jeweiligen Planetenräder 60, 70 korrespondieren. Im Hohlrad 36 sind ebenfalls zwei unterschiedlich geteilte Zahnkränze ausgebildet.

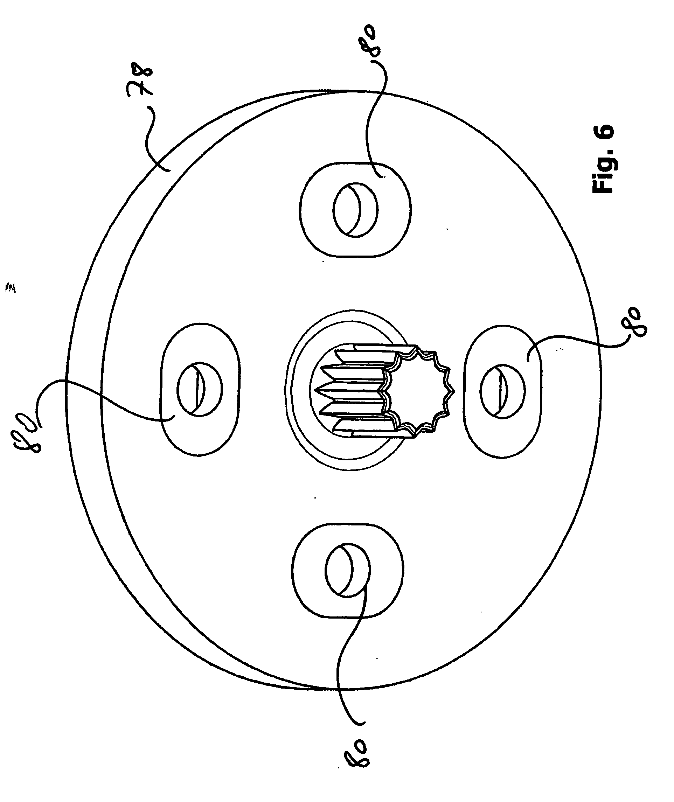

Fig. 6 zeigt eine perspektivische Darstellung der abtriebsseitigen Getriebekomponente 78 des Planetengetriebes 34 mit dem profilierten Zapfen 42 zur Drehmomentabgabe sowie mit aus einem schwingungsdämpfenden Material bestehenden Auskleidungen 80 in den für sie vorgesehenen Aussparungen in der Komponente 78. Bei der hier gezeigten Ausführungsform sind die Aussparungen und die Auskleidungen 80 im Wesentlichen radialsymmetrisch. Die Getriebekomponente 78 wird am Abtrieb des Planetengetriebes 34 so montiert, dass die Achsabschnitte 76 (nicht dargestellt), die durch den Abtrieb des Planetengetriebes 34 auf einer Kreisbahn geführt werden, in die vorgesehenen Aufnahmen der schwingungsdämpfenden Elemente 80 eingreifen und so das Drehmoment auf die Komponente 78 übertragen. Die Elemente 80 können auf die Komponente 78 beispielsweise aufvulkanisiert oder separat hergestellt und anschließend montiert werden.

## Patentansprüche

1. Elektrisch angetriebener Bremsaktuator (10), umfassend einen Elektromotor (20) zur Erzeugung eines Drehmoments und eine Getriebeeinrichtung (34, 48) zur Drehmomentübertragung, wobei die Getriebeeinrichtung (34, 48) wenigstens ein drehmomentübertragendes Getriebebauteil (28) umfasst, wobei das Getriebebauteil (28) eine Nabe (56) mit mehreren am Äußenumfang der Nabe (56) ausgebildeten Einbuchtungen, einen zur Nabe (56) konzentrisch angeordneten Radkranz (52) mit zu den Einbuchtungen der Nabe (56) korrespondierenden und innen ausgebildeten Ausstülpungen sowie ein schwingungsdämpfendes Element (54) umfasst, welches um die Nabe (56) herum und zwischen Nabe (56) und Radkranz (52) Drehmoment übertragend angeordnet ist.

2. Bremsaktuator (10) nach Anspruch 1, wobei das schwingungsdämpfende Element (54) als konzentrische Buchse bezüglich der Drehachse des drehmomentübertragenden Getriebebauteils (28) ausgebildet ist.

3. Bremsaktuator (10) nach Anspruch 1 oder 2, wobei das schwingungsdämpfende Element (54) in konstanter Dicke bezüglich der Erstreckung der Getriebebauteilachse ausgeführt ist.

4. Bremsaktuator (10) nach einem der vorhergehenden Ansprüche, wobei die Einbuchtungen der Nabe im Wesentlichen rotationssymmetrisch zur Drehachse des drehmomentübertragenden Getriebebauteils (28) ausgebildet sind.

5. Bremsaktuator (10) nach einem der vorhergehenden Ansprüche, wobei die Einbuchtungen der Nabe im Wesentlichen gleichförmig ausgebildet sind.

6. Bremsaktuator (10) nach einem der vorhergehenden Ansprüche, wobei das drehmomentübertragende Getriebebauteil (28) ein abtriebsseitiges Riemenrad eines Riemengetriebes (48) bildet.

7. Bremsaktuator (10) nach Anspruch 6, wobei die Nabe (56) des Riemenrads (28) mit einem Sonnenrad (50) zum Antreiben eines nachgeschalteten Planetengetriebes (34) drehfest verbunden ist.

8. Bremsaktuator (10) nach Anspruch 6 oder 7, wobei das Riemengetriebe (48) ferner ein antriebsseitiges Riemenrad (24) umfasst, welches mit einer Welle des Elektromotors (20) drehmomentschlüssig verbunden ist.

9. Bremsaktuator (10) nach Anspruch 8, wobei der gegenseitige Abstand des antriebsseitigen und abtriebsseitigen Riemenrads (24, 28) mittels eines starren Abstandshalters (30) festgelegt ist.

10. Bremsaktuator (10) nach einem der vorhergehenden Ansprüche, wobei das schwingungsdämpfende Element (54) aus einem schwingungsdämpfenden Elastomermaterial besteht.

11. Bremsaktuator (10) nach einem der vorhergehenden Ansprüche, wobei der Radkranz (52) aus Hartkomponenten-Kunststoff besteht.

12. Bremsaktuator (10) nach einem der vorhergehenden Ansprüche, wobei die Nabe (56) aus einem Sintermetall besteht.

13. Bremssystem, insbesondere Kraftfahrzeug-Bremssystem, mit einem elektrisch angetriebenen Bremsaktuator (10) nach einem der Ansprüche 1 bis 12.

14. Bremssystem nach Anspruch 13, wobei der elektrisch angetriebene Bremsaktuator (10) einer Betriebsbremse und/oder einer Feststellbremse zugeordnet ist.

## Claims

1. Electrically driven brake actuator (10), comprising an electric motor (20) for producing a torque and a gear device for torque transmission (34, 48), wherein the gear device for torque transmission (34, 48) comprises at least one torque-transmitting gear component (28), wherein the torque-transmitting gear component (28) comprises a hub (56) having a plurality of indentations located at the outer circumference of the hub (56), a ring gear (52) concentric with the hub (56), having on the inside protuberances corresponding to the indentations of the hub (56), and a vibration-damping element (54) which is arranged around the hub (56) and between the hub (56) and the ring gear (52) in a torque-transmitting manner.

2. Brake actuator (10) according to Claim 1, wherein the vibration-damping element (54) is formed as a bushing, concentric with the axis of rotation of the torque-transmitting gear component (28).

3. Brake actuator (10) according to Claim 1 or 2, wherein the vibration-damping element (54) has a constant thickness relative to the extension of the axis of the torque-transmitting gear component.

4. Brake actuator (10) according to one of the preceding claims, wherein the indentations of the hub are formed with the axis of rotation of the torque-transmitting gear component (28) substantially rotationally symmetrical.

5. Brake actuator (10) according to one of the preceding claims, wherein the indentations of the hub are formed substantially regularly.

6. Brake actuator (10) according to one of the preceding claims, wherein the torque-transmitting gear component (28) forms an output pulley of a belt gear mechanism (48).

7. Brake actuator (10) according to Claim 6, wherein the hub (56) of the pulley (28) is connected to a sun wheel (50) in a rotationally rigid manner for driving a downstream planetary gear mechanism (34).

8. Brake actuator (10) according to Claim 6 or 7, wherein the belt gear mechanism (48) further comprises an input pulley (24), which is connected to a shaft of the electric motor (20) in a torque-tight manner.

9. Brake actuator (10) according to Claim 8, wherein the mutual distance between the input and the output pulley (24, 28) is defined by means of a rigid spacer (30).

10. Brake actuator (10) according to one of the preceding claims, wherein the vibration-damping element (54) consists of a vibration-damping elastomer material.

11. Brake actuator (10) according to one of the preceding claims, wherein the ring gear (52) consists of hard-component plastics material.

12. Brake actuator (10) according to one of the preceding claims, wherein the hub (56) consists of a sintered metal.

13. Brake system, in particular motor vehicle brake system, with an electrically driven brake actuator (10) according to any one of Claims 1 to 12.

14. Brake system according to Claim 13, wherein the electrically driven brake actuator (10) is associated with a service brake and/or a parking brake.

## Revendications

1. Actionneur de frein (10) à commande électrique, comprenant un moteur électrique (20) destiné à produire un couple et un dispositif de transmission de couple (34, 48) pour transférer le couple, ledit dispositif de transmission (34, 48) comportant au moins une pièce transmettant le couple (28), ladite pièce de transmission (28) comportant un moyeu (56) pourvu de plusieurs indentations formées sur la circonférence extérieure dudit moyeu (56), une couronne de roue (52) disposée de manière concentrique par rapport au moyeu (56) et pourvue de renflements formés à l'intérieur et correspondant aux indentations du moyeu (56), ainsi qu'un élément amortisseur de vibrations (54) disposé tout autour du moyeu (56) et entre le moyeu (56) et la couronne de roue (52) de manière à transmettre le couple.

2. Actionneur de frein (10) selon la revendication 1, ledit élément amortisseur de vibrations (54) étant conçu comme une douille concentrique par rapport à l'axe de rotation de la pièce transmettant le couple (28).

3. Actionneur de frein (10) selon la revendication 1 ou 2, l'élément amortisseur de vibrations (54) étant réalisé avec une épaisseur constante par rapport à l'étendue de l'axe de la pièce transmettant le couple.

4. Actionneur de frein (10) selon l'une des revendications précédentes, les indentations du moyeu étant disposées pour l'essentiel de manière à répondre à une symétrie de rotation par rapport à l'axe de rotation de la pièce transmettant le couple (28).

5. Actionneur de frein (10) selon l'une des revendications précédentes, les indentations du moyeu étant conçues pour l'essentiel de forme identique.

6. Actionneur de frein (10) selon l'une des revendications précédentes, la pièce transmettant le couple (28) formant du côté entraîné une roue à courroie d'une transmission par courroie (48).

7. Actionneur de frein (10) selon la revendication 6, le moyeu (56) de la roue à courroie (28) étant relié fixe en rotation à une roue planétaire (50) pour entraîner une transmission planétaire (34) montée en aval.

8. Actionneur de frein (10) selon la revendication 6 ou 7, la transmission par courroie (48) comprenant en outre, du côté d'entraînement, une roue à courroie (24) laquelle est reliée en liaison de transmission de couple à un arbre du moteur électrique (20).

9. Actionneur de frein (10) selon la revendication 8, l'écart réciproque entre la roue à courroie du côté entraîné (24) et la roue à courroie du côté entraîneur (28) est assuré au moyen d'un élément d'écartement rigide (30).

10. Actionneur de frein (10) selon l'une des revendications précédentes, ledit élément amortisseur de vibrations (54) étant constitué par une matière élastomère amortissant les vibrations.

11. Actionneur de frein (10) selon l'une des revendications précédentes, ladite couronne de roue (52) étant constituée par une matière plastique à composants durs.

12. Actionneur de frein (10) selon l'une des revendications précédentes, le moyeu (56) étant constitué par un métal fritté.

13. Système de freinage, plus particulièrement un système de freinage de véhicule automobile, pourvu d'un actionneur de frein (10) entraîné électriquement selon l'une des revendications 1 à 12.

14. Système de freinage selon la revendication 13, l'actionneur de frein (10) entraîné électriquement étant associé à un frein de service et/ou à un frein de stationnement.
